# EUROPEAN PATENT APPLICATION

(11) **EP 2 518 420 A1**
(43) Date of publication of application: **31.10.2012**
(21) Application number: 11163913.4
(22) Date of filing: 27.04.2011
(51) Int. Cl.: F24J 2/52, H01L 31/042

(54) **Photovoltaic energy harvesting system with flexible support**

(71) Applicant: NV Bekaert SA, 8550 Zwevegem (BE)
(72) Inventor: Vanhevel, Rik, 8720, Oeselgem (BE)
(74) Representative: Hertoghe, Kris Angèle Louisa

(57) **Abstract**

In a first aspect, the present invention relates to a photovoltaic energy harvesting system (100) comprising a support, the support having a carrier structure with a base (112) and flexible fixtures (115) attached to said base (112). The system furthermore comprises a plurality of photovoltaic receptors (120), which are being attached to the flexible fixtures (115). The flexible fixtures (115) are adapted for providing flexural integrity to the support, and the photovoltaic energy harvesting system furthermore comprises a flexible fixture spacer element (130) having at least three points of force application (131,132) and at least two driving means (140) for exerting forces on at least two of the points of force application (131) such that the direction of each of said photovoltaic receptors (120) is collectively orientable through the action of said driving means.

## Description

### Field of the invention

The present invention relates to the field of photovoltaic energy generation, more specifically, it relates to systems for photovoltaic energy harvesting with active solar tracking.

### Background of the invention

Photovoltaic generators are commonly used to receive solar rays and convert them into electricity for being provided to an electrical load. Such photovoltaic generators typically comprise photovoltaic panels, which for example encase multiple photovoltaic cells between glass layers. The photovoltaic cells have an active surface, responsible for converting solar rays into electrical currents.

Currently, typical photovoltaic generators are quite limited in yield. As an example, for consumer-level products, yields of less than 20%, or e.g. for top-range systems, yields up to only 30% may be achieved. These limited yields are mainly caused by the spectral sensitivity of the active surface of the photovoltaic cells, thermal losses, reflection of incident rays and resistive losses in the system. Apart from the inherent low yield of photovoltaic generators, the amount of energy generated is dependent on the intensity of incident rays, which is e.g. dependent on orientation of the photovoltaic cells relative to the solar celestial position. Installing photovoltaic panels in a fixed position and orientation therefore results in a varying efficiency throughout the day.

The low efficiency of photovoltaic generators also entails a large exposure surface area requirement as function of energy production. For example, a system required to have a peak output power of 10 kW may require a surface area of about 150 m².

Sufficiently large surface areas may typically be achieved by placing photovoltaic panels on building roofs. This involves a number of technical and architectural considerations, for example relating to structural integrity, building code and aesthetic aspects. Obviously, this also implicates that the roof surface area available for photovoltaic panels is limited by the available roof area, and a significant portion of available roof area may not prove to be suitable for photovoltaic energy production due to disadvantageous orientation or overshadowing.

Alternatively, photovoltaic panels may be placed on support structures adapted for the purpose of photovoltaic energy generation. Such support structures may furthermore provide additional advantages.

For example, in European patent application EP 1626140A2 a shelter structure for vehicles is disclosed. This shelter structure comprises a support which supports photovoltaic panels. The support is furthermore adapted to allow rotation and inclination of the photovoltaic panels, such that the photovoltaic cells may be oriented to optimize power output. The disclosed shelter structure thus combines photovoltaic energy collection with the added benefit of providing a shelter for vehicles, and provides sun-tracking capabilities to optimize yield.

### Summary of the invention

It is an object of embodiments of the present invention to provide efficient photovoltaic energy harvesting systems.

The above objective is accomplished by a device and a method according to embodiments of the present invention.

In a first aspect, the present invention provides a photovoltaic energy harvesting system comprising a support, said support having a carrier structure with a base and flexible fixtures attached to said base, and a plurality of photovoltaic receptors, said photovoltaic receptors being attached to the flexible fixtures. In the photovoltaic energy harvesting system according to the first aspect of the present invention the flexible fixtures are adapted for providing flexural integrity to the support. In the context of the present invention, "flexural integrity" refers specifically to the use of potential energy stored in a deformed object, e.g. a bended elongate object made of material with a high flexural modulus, such as for example a bended steel wire spring, such that the object can support and resist self-weight and loads it is subjected to, and in which the object forms a coherent entity, i.e. possesses internal integrity. The photovoltaic energy harvesting system furthermore comprises a flexible fixture spacer element having at least three points of force application, and at least two driving means for exerting forces on at least two of the points of force application such that the direction of each of said photovoltaic receptors is collectively orientable through the action of said driving means.

It is an advantage of a photovoltaic energy harvesting system according to embodiments of the present invention that energy harvesting is efficient, due to the orientability of photovoltaic receptors. The system according to embodiments of the present invention is particularly advantageous as it provides a simple and easily operable means for providing the collective orientability of the photovoltaic receptors.

A system according to embodiments of the present invention may furthermore comprise, on top of the at least two driving means for exerting forces on at least two of the points of force application, at least one rigid linkage connecting at least one of the points of force application to the base of said support. Alternatively, a system according to embodiments of the present invention may comprise three driving means for exerting force on three points of force application on the flexible fixture spacer element. This later embodiment provides the advantageous possibility to constrict the complete structure so as to decrease its flexibility increase its rigidity, which may prove particularly useful for example in case of windy conditions, for example in case of storm.

In a system according to embodiments of the present invention, the flexible fixture spacer element may be contacting said flexible fixtures. In accordance with embodiments of the present invention, different degrees of intensity of contact are possible. As an example, contact may be obtained because the spacer element is pressed against the flexible fixtures or vice versa, thus providing a sliding contact. In accordance with particular embodiments, such sliding contact can be limited to a sliding contact in one direction, e.g. by guiding the flexible fixtures through a sliding bush. According to an alternative example, a hinging contact may be provided between the spacer element and the flexible fixtures.

According to embodiments of the present invention, the at least two, optionally three or more driving means, may directly exert force on an equal number of points of force application, for example by means of a plunjer-cylinder system directly impacting on the flexible fixture spacer element. Alternatively, a system according to embodiments of the present invention may comprise at least one tensioning element adapted for transmission of mechanical force from at least one of said driving means to at least one of said points of force application. In particular embodiments of the present invention, a same number of tensioning elements may be provided as the number of driving means present. In this embodiment, each driving means impacts on the flexible fixture spacer element via a tensioning element. In particular embodiments of the present invention, the driving means may be linear actuators.

In embodiments of the present invention, the at least one tensioning element may be a wire element, which is optionally at least partly lead through a casing. In particular embodiments of the present invention, the at least one tensioning element may be a push-pull cable, at least partly guided through a flexible casing.

In embodiments of the present invention, the flexible fixtures may be formed in a loop. The flexible fixtures may comprise at least one resilient lineal element, which may for example comprise glass fiber, steel or a composite material. In particular embodiments, the flexible fixtures may comprise two or more resilient lineal elements forming the loop. A plurality of connections may be provided between said plurality of loops for providing flexural integrity to the support. These contacts may be sliding contacts.

In particular embodiments of the first aspect of the present invention, the flexible fixtures may comprise electrical conductors for conducting electricity generated by said photovoltaic receptors. The electrical conductors may guide the generated electricity towards an appliance being driven by this electricity, or towards a battery system for storing the corresponding energy.

A system according to embodiments of the present invention may furthermore comprise a controlling means adapted for controlling said at least two driving means. Said controlling means may for example be integrated in the stem of the support. The controlling means may be adapted for controlling the direction of the photovoltaic receptors taking into account a predetermined path of the sun on the celestial sphere. The controlling means may be adapted for controlling the direction of the photovoltaic receptors so as to optimize the output of said energy harvesting system. The controlling means may be adapted for controlling the direction of the photovoltaic receptors taking into account meteorological circumstances, in particular for example windy conditions or snow.

A system according to embodiments of the present invention may furthermore comprise an electricity outlet for electrical and/or hybrid vehicles. The electricity outlet may be electrically connected to the photovoltaic receptors, such that it is the electricity generated by the photovoltaic receptors which may be used for charging electrical and/or hybrid vehicles.

A system according to embodiments of the present invention may furthermore comprise at least one illumination source. This illumination source may get the required electrical input from a chargeable energy storage device, such as a rechargeable battery, a capacitor or a flywheel. Such a chargeable energy storage device may be charged with electricity generated by the photovoltaic receptors, e.g. during daylight, to provide the at least one illumination source with stored electricity under low ambient light conditions, e.g. at night.

In a second aspect, the present invention provides a method for harvesting photovoltaic energy, the method comprising providing tensional integrity to a support having photovoltaic receptors attached thereto, exerting a plurality of forces on a flexible fixture spacer element, such that said flexible fixture spacer element bends said support so as to collectively adjust the orientation of each of said photovoltaic receptors, and generating electricity with said photovoltaic receptors. Exerting a plurality of forces may include taking into account a predetermined path of the sun on the celestial sphere. Exerting a plurality of forces may include optimizing the output of the photovoltaic receptors. Exerting a plurality of forces may include taking into account meteorological circumstances.

Particular and preferred aspects of the invention are set out in the accompanying independent and dependent claims. Features from the dependent claims may be combined with features of the independent claims and with features of other dependent claims as appropriate and not merely as explicitly set out in the claims.

The above and other aspects of the invention will be apparent from and elucidated with reference to the embodiment(s) described hereinafter.

### Brief description of the drawings

FIG. 1 and FIG. 2 illustrate a side view and a top view, respectively, of a photovoltaic energy harvesting system according to a first embodiment of a first aspect of present invention.
FIG. 3 and FIG. 4 illustrate a side view and a top view, respectively, of a photovoltaic energy harvesting system according to a second embodiment of a first aspect of present invention, having flexural fixtures comprising multiple loops of a resilient lineal element.
FIG. 5 illustrates a side view of a photovoltaic energy harvesting system according to a second embodiment of a first aspect of present invention, showing only a single loop of the resilient lineal element.
FIG. 6 illustrates a flexible fixture spacer element for use with a photovoltaic energy harvesting system according to embodiments of the present invention, making use of a single tensioning element and three driving means.
FIG. 7 illustrates a photovoltaic energy harvesting system according to embodiments of the present invention, in a position such that the rigidity thereof is maximal.
FIG. 8 illustrates a photovoltaic energy harvesting system as in FIG.7, in a substantially horizontal position.
FIG. 9 illustrates the photovoltaic energy harvesting system of FIG. 7 and FIG. 8, in an inclined position.

The drawings are only schematic and are non-limiting. In the drawings, the size of some of the elements may be exaggerated and not drawn on scale for illustrative purposes.

Any reference signs in the claims shall not be construed as limiting the scope.

In the different drawings, the same reference signs refer to the same or analogous elements.

### Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

The terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

Where in embodiments of the present invention reference is made to "flexural integrity", reference is made to the use of a material's ability to resist deformation under load so as to provide structural integrity. For example, flexural integrity refers to the use of potential energy stored in a deformed object, e.g. a bended elongate object made of material with a high flexural modulus, such as for example a bended steel wire spring, such that the object can support and resist self-weight and loads it is subjected to. Furthermore, a structure exhibiting flexural integrity is assumed to form a coherent entity, i.e. to possess internal integrity.

In a first aspect, the present invention relates to a photovoltaic energy harvesting system. Such photovoltaic energy harvesting systems are commonly used to receive solar rays and convert them into electricity to be provided to an electrical load. Such an electrical load may for example comprise a chargeable battery, a lighting fixture, an electrical consumer appliance, an electrical or hybrid vehicle or any electrical power consuming device in general. Such an electrical load may also comprise a distribution infrastructure to supply energy to any number of such power consuming devices, such as a local power distribution grid of a private or public building or a large area power distribution grid. Such a photovoltaic energy harvesting system may comprise any number and/or combination of suitable elements for transforming, conditioning, conducting, storing and/or transmitting energy, depending on intended operational characteristics of the system, as would be evident to a person skilled in the art. Such elements may for example comprise transformers, inverters, capacitors, batteries, flywheels, interconnection wiring, gauges and/or controllers.

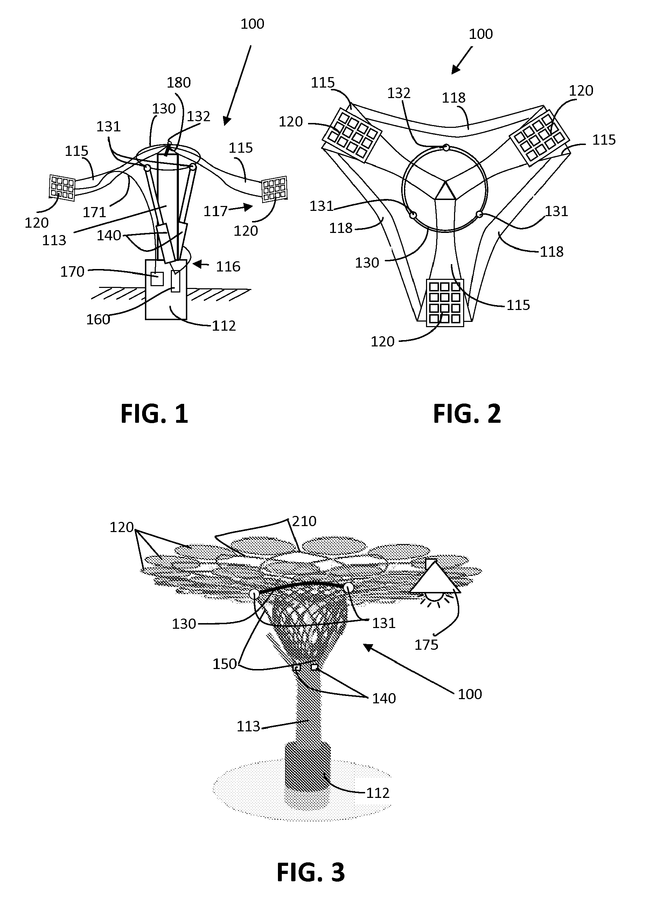

By way of illustration, embodiments of the present invention not being limited thereto, an exemplary photovoltaic energy harvesting system 100 according to a first embodiment of the first aspect of the present invention is illustrated in FIG. 1 and FIG. 2, an exemplary photovoltaic energy harvesting system 100 according to a second embodiment of the first aspect of the present invention is illustrated in FIG. 3, FIG. 4 and FIG. 5. Both embodiments will be discussed in more detail below. They are different in the basics of the flexible fixtures 115, but they share a lot of other details.

The photovoltaic energy harvesting system 100 according to embodiments of the present invention comprises a support. This support has a carrier structure with a base 112 and flexible fixtures 115 attached to said base 112. The base 112 may be fixed to or into the ground by any suitable anchoring member, such as for example a plinth or any other foundation system. The base 112 may furthermore comprise a post 113, e.g. a post extending along a substantially vertical axis to achieve a predetermined height, for example to avoid overshadowing of the photovoltaic energy harvesting system 100 by other structures in the environment, to avoid obstruction of pedestrians and/or vehicles by the support or to reduce the risk of theft or vandalism.

It is a particular feature of embodiments of the present invention that the flexible fixtures 115 are adapted for providing flexural integrity to the support. The flexible fixtures 115 may form for example a number of flexible leaves or leave-like structures. In the exemplary system 100 depicted in FIG. 1, embodiments of the invention not being limited thereto, the flexible fixtures 115 form three leaves attached to the base 112 of the support. The leaves, being only attached at one end 116 while the other end 117 may move freely, bend under the force of gravity until an equilibrium is reached between gravitational forces and the stresses in the material of the flexible fixtures 115 induced by the bending. The free ends 117 of the leaves may for example be interconnected by flexible bands 118, e.g. bands made of metal strings, to limit the free movement of the free ends. In such way, free movement of the flexible fixtures 115 as a group is possible while independent movement of individual elements of the flexible fixtures 115, e.g. the separate flexible leaves is restricted. In other embodiments of the present invention, if more leaves would be provided in the energy harvesting system, the flexible fixtures 115 of one leave may cross flexible fixtures 115 of another leave. Rather than linking both leaves to one another by means of flexible bands 118, other types of interconnections between the leaves may be provided, such as for example sliding bushes or hinging connections.

In particular embodiments, the flexible fixtures 115 may comprise at least one resilient lineal element, such as a wire or a tubular element. The at least one resilient lineal element may for example consist of lengths of metal wire, e.g. wire springs composed of steel, having any appropriate cross-section, such as rectangular, oblong, elliptical or round. By preference the material, e.g. metal, of which the resilient lineal element is made, has a high tensile strength in order to make it less plastically deformable under flexion. Suitable metallic compositions are, the present invention not being limited thereto, high tensile steels, stainless steels or high carbon steels. Temperature hardened steels such as oil-hardened wires may be particularly useful. Optionally, the wires may be coated with a functional coating, for example to protect the steel from rusting, e.g. by galvanizing the steel, to provide a sufficiently sliding contact, e.g. by means of a Teflon or PET coating, or simply for aesthetic reasons.

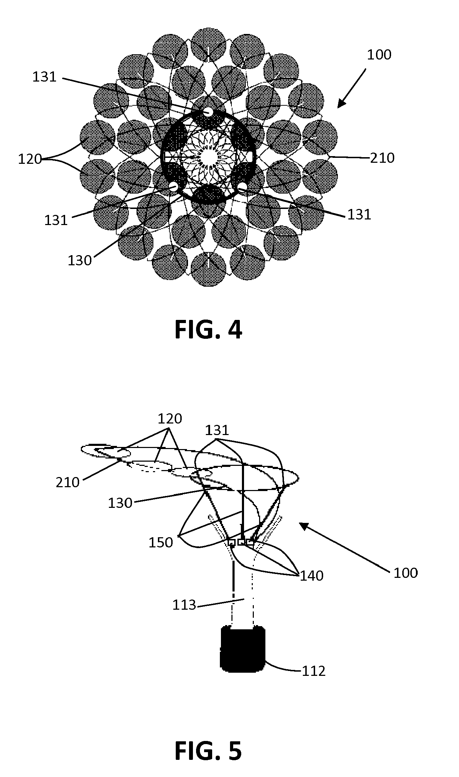

Alternatively, other materials may be used, such as glass fiber or composite materials. In fact, any material with sufficient flexibility may be used, including, for example, biological materials such as pliable wood. In particular embodiments, two or more resilient lineal elements may be fixedly attached together, e.g. by welding, so as to form the leave-like structures. In alternative embodiments, a single flexible fixture 115, e.g. in the form of a single resilient lineal element 210, may be formed in a loop so as to form a leave-like structure, e.g. as shown in FIG. 5. Lineal element such as metal wire may be used to form a plurality of loops, e.g. as shown in FIG. 3 and FIG. 4, each loop forming a leave-like structure. Flexural integrity of the flexible fixtures 115 in such a support may be obtained by interlacing the lineal element such that the flexible fixtures form a connected, yet still flexible, entity. Alternative means for providing a plurality of connections between the plurality of loops for providing flexural integrity may be used, for instance connecting pairs of loops by ringlets or small wire loops to keep such pair of loops in proximity while allowing a limited degree of relative movement. Alternatively, sliding or hinging contacts may be provided between the plurality of loops. It will be apparent to a person skilled in the art that many known methods may be used to obtain a suitable support according to embodiments of the present invention. For example, the flexible fixtures 115 may comprise a single long strand of metal wire woven in a mesh of interlocking loops, e.g. in a hypotrochoid form, or the flexible fixtures 115 may comprise a plurality of strands of metal wire, for example combined in a web-like structure.

A photovoltaic energy harvesting system 100 according to embodiments of the present invention furthermore comprises a plurality of photovoltaic receptors 120. These photovoltaic receptors 120 are attached by any suitable attachment means to the flexible fixtures 115 of the support 100. Such a photovoltaic receptor 120 may for example comprise a photovoltaic panel, e.g. a packaged interconnected assembly of photovoltaic cells. Such photovoltaic cells are for example encapsulated between two glass layers in a photovoltaic panel. Photovoltaic panels are usually rigid, but semi-flexible panels are also known in the art. Preferably, the photovoltaic receptors 120 used are lightweight appliances. When solar rays interact with the active surface of a photovoltaic cell, an electrical current is generated through the photovoltaic effect, which may be supplied to a load, e.g. a power consuming or power storing system. The majority of photovoltaic panels use wafer-based crystalline silicon photovoltaic cells, or thin-film cells based on cadmium telluride or silicon.

In particular embodiments of the present invention, the flexible fixtures 115 may be adapted to conduct electricity generated by the photovoltaic receptors 120, e.g. the flexible fixtures may comprise electrical conductors for conducting electricity generated by the photovoltaic receptors 120. The generated electricity may for example be conducted to a means for conditioning, storing, distributing and/or converting electricity, which may for example be integrated in the base 112 of the support.

In advantageous embodiments, the photovoltaic energy harvesting system 100 may comprise at least one illumination source 175, as illustrated in FIG. 3. For instance, such illumination source could be secured to the support, e.g. fixed to the base 112 or to the flexible fixtures 115. Such illumination source 175 may for example be powered with electricity stored in a battery or other energy storage system, for example such battery or storage system integrated in the base 112. In such cases, said battery or storage system may be charged with electricity generated by the photovoltaic receptors 120.

The photovoltaic energy harvesting system 100 according to embodiments of the present invention may comprise an electricity outlet 170 for electrical and/or hybrid vehicles. In such a system, the flexible fixtures 115 could for example perform the function of a shelter to protect such vehicle from rain and/or sunlight, while providing a ecologically attractive source of power, i.e. the electricity outlet, to charge the vehicle.

It is furthermore particular to embodiments of the present invention that the photovoltaic energy harvesting system comprises a flexible fixture spacer element 130 having at least three points of force application 131, 132 and at least two driving means 140 for exerting forces on at least two of the points of force application 131 such that the direction of each of said photovoltaic receptors is collectively orientable through the action of said driving means 140. The flexible fixture spacer element 130 is arranged so as to contact the flexible fixtures 115. The contact between the spacer element 130 and the flexible fixtures 115 may be a sliding contact, optionally restricted to movement in one direction. For example, such restricted sliding contact may be obtained by a flexible fixture spacer element 130 comprising or consisting of two concentric rings, i.e. an inner and an outer ring, interconnected by radial connections, e.g. at least three radial rigid links, such that the flexible fixtures 115 pass between these rings. The inner ring would for example be arranged to push the flexible fixtures 115 downwardly when the spacer element 130 is pulled down by the driving means 140 so as to bend the flexible fixtures 115 downward, while the outer ring would be arranged to push from below on the flexible fixtures 115 when the spacer element 130 is pushed up by the driving means 140, so as to bend the flexible fixtures 115 upwardly. When the flexible fixtures 115 comprise a plurality of leaf-like structures, such as the leaves in FIG. 1 and FIG. 2, or the loops of resilient lineal element 210 as illustrated in FIG. 3 and FIG. 4, this would achieve an effect similar to the opening and closing of the leaves of a flower. Alternatively, the contact between the spacer element 130 and the flexible fixtures 115 may be a hinging contact.

In embodiments of the present invention, the flexible fixture spacer element 130 could be a ring, e.g. a circular band of metal or any other suitable material, as illustrated in FIG. 1. Alternatively, the flexible fixture spacer element could be a loop of any suitable form other than a ring. In yet alternative embodiments, the flexible fixture spacer element could be a plate, for example a disk-shaped plate, or a plate having any other suitable shape.

Such a spacer element, e.g. spacer element 130, can for instance be pushed or pulled against the flexible fixtures 115 to apply force by contact to the flexible fixtures. In general the flexible fixture spacer element 130 may be contacting the flexible fixtures so as to be able to influence the orientation of the flexible fixtures 115, and therefore the photovoltaic receptors 120 attached thereon. The flexural integrity of the support according to the first aspect of the present invention may further ensure that the orientation of the photovoltaic receptors 120 is collectively settable. This means that the flexible fixtures 115 may move in a collective and predictable way by driving the movement of the spacer element 130.

The system according to embodiments of the present invention comprises at least two driving means 140 for exerting forces on at least two points of force application 131 on the flexible fixture spacer element 130. Such driving means 140 may be linear actuators. Alternatively, the driving means 140 may comprise a pneumatic system or a hydraulic system to exert forces on the flexible fixture spacer element 130.

Mechanical forces from at least one of the driving means 140 may be directly applied to at least one of the points of force application 131. For example, the driving means may be a piston-cylinder combination, of which one of the piston or cylinder is directly connected to one of the points of force application 131.

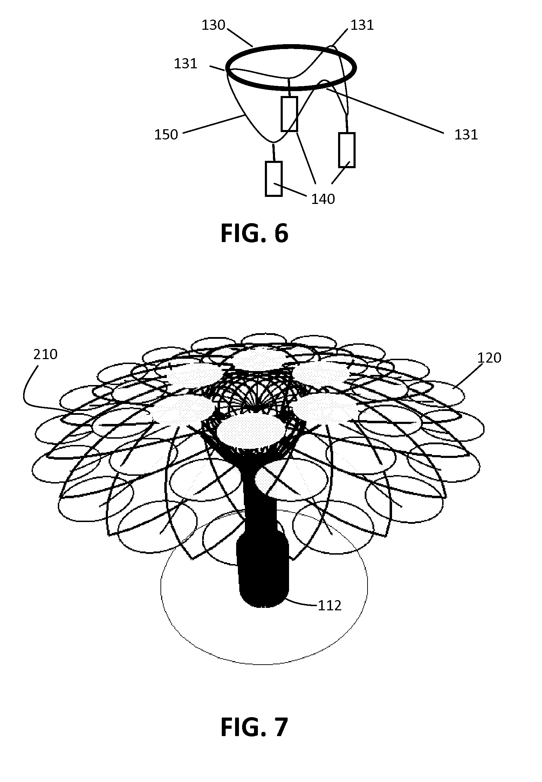

In alternative embodiments, mechanical forces from at least one of the driving means 140 to at least one of the points of force application 131 may be transmitted by means of at least one tensioning element 150, such as for example a piece of wire, rope, strand, band or a chain. In particular embodiments, as for example illustrated in FIG. 6, a single tensioning element 150 may be used for moving the spacer element 130. Such single tensioning element 150 should then be attached, on the one hand, at the spacer element 130 at the at least two points of force application, in the embodiments illustrated three points of force application, and on the other hand, at the at least two driving means 140, in the embodiment illustrated three driving elements 140. In yet alternative embodiments, as illustrated in FIG.3, each driving means 140 may be connected to one extremity of such tensioning element 150, the other extremities of these tensioning elements applying the forces exerted by the driving means to the points of force application 131 on the flexible fixture spacer element 130. In embodiments of the present invention, the number of tensioning elements may be equal to the number of driving means. In alternative embodiments of the present invention, there may be more tensioning elements than driving means. First extremities of different tensioning elements 150 may then be connected to a single driving means, the other extremities of these tensioning elements 150 being connected to different points of force application.

The at least one tensioning element 150 may be a push-pull cable, at least partly guided through a flexible casing. Such tensioning 150 element may for example comprise a central push-pull cable of substantial tensile strength, e.g. a steel or stainless steel cable, and a hollow outer cable, the flexible casing, which may be of composite construction, e.g. comprising or consisting of helical steel wire lined with plastic. The at least one tensioning element 150 may for example be a Bowden cable.

While the photovoltaic energy harvesting system 100 comprises a flexible fixture spacer element 130 having at least three points of force application 131,132, only at least two points of force application 131 need to receive forces exerted by the at least two driving means 140. Points of force application 132 not receiving such forces exerted by the driving means 140 may be linked in a hinging way to the base 132 of the support, e.g. allowing the spacer element 130 to hinge around a rigid linkage 180 to the base 132 of the support.

The application of at least two separate forces on the flexible fixture spacer element 130 may allow to control the orientation of the flexible fixture spacer element 130 around at least two axis of rotation, e.g. to control inclination and azimuth of the spacer element 130 and thereby, by e.g. pushing and/or pulling of the spacer element 130 on the flexible fixtures 115, control the orientation of the photovoltaic receptors 120 attached on the leave-shaped structures. The photovoltaic energy harvesting system 100 may comprise a controlling means 160 adapted for controlling the at least two driving means 140. The controlling means 160 may for example comprise a programmable logic controller, a proportional-integral-derivative controller or other form of electronic automation controller. The controlling means 160 may be adapted for controlling the direction of the photovoltaic receptors 120 taking into account a predetermined path of the sun on the celestial sphere. In particular, the controlling means 160 may for example be adapted to adjust azimuth and inclination of the photovoltaic receptors 120 as a function of reference values stored in a memory, e.g. an electronic memory, e.g. reference values based on a known position of the sun at the terrestrial location of the system 100 for a given date and time. Alternatively or additionally, the controlling means 160 may be adapted to adjust azimuth and inclination of the photovoltaic receptors 120 as a function of energy output of the system 100, e.g. so as to improve energy output. For example, the controlling means 160 may be adapted for performing a scanning strategy to determine an adjusted position wherein the energy output of the system is higher than an initial position, e.g. by measuring the energy output of the system 100 while varying the azimuth and inclination of the photovoltaic receptors 120 along a predetermined pattern, such as an outward spiraling pattern centered around the initial position, and subsequently adjusting the orientation of the photovoltaic receptors 120 to the position for which a maximal output was measured.

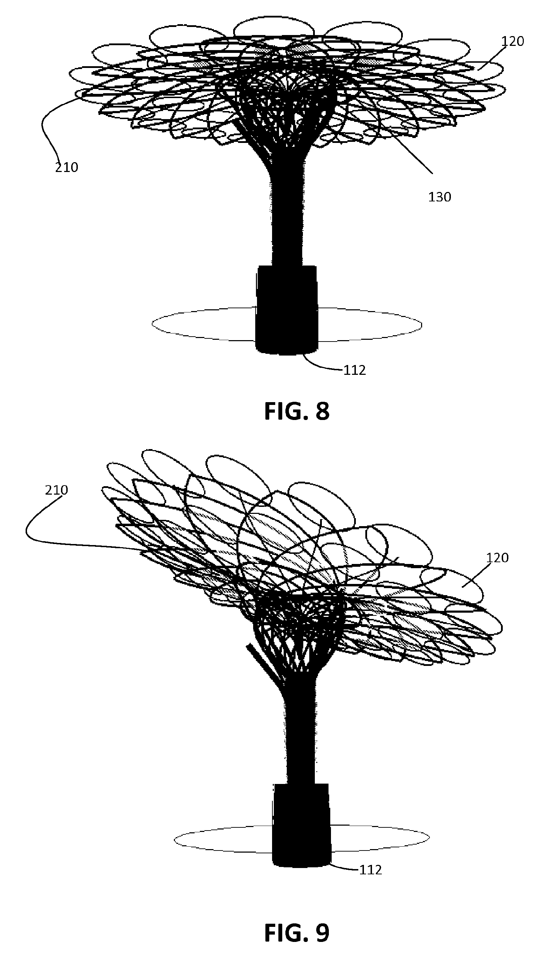

The system 100 furthermore may be actively protected from damage due to meteorological conditions, such as e.g. storms or heavy snow fall, by adjusting the orientation of the photovoltaic receptors 120 to a position in which damage is less likely. Hereto, the controlling means 160 may be adapted for controlling the direction of the photovoltaic receptors 120 taking into account meteorological circumstances. Protection against storm may be obtained for example, in case three points of force application on the spacer element 130 may be actively driven by driving means 140, by actuating the spacer element 130 such that the rigidity of the complete structure is maximal, as for example illustrated in FIG. 7, for example to reduce the probability of permanent damage during heavy storms, e.g. with wind speeds above 80 km/h. Alternatively, the spacer element 130 may be driven such that the flexible fixtures 115 form a structure which is as close to horizontal as possible, as illustrated in FIG. 8, for example to minimize the wind exposure during strong winds, e.g. with wind speeds between 50 km/h and 80 km/h, or which is inclined under a pre-determined angle as desired, as illustrated in FIG. 9, e.g. an angle of at least 30° from horizontal, e.g. an angle of 45° from the horizontal, for example to avoid piling up of snow on the system 100 during heavy snowfall.

## Claims

1. A photovoltaic energy harvesting system (100) comprising
- a support, said support having a carrier structure with a base (112) and flexible fixtures (115) attached to said base (112),
- a plurality of photovoltaic receptors (120), said photovoltaic receptors (120) being attached to the flexible fixtures (115),
**characterized in that** the flexible fixtures (115) are adapted for providing flexural integrity to the support, the photovoltaic energy harvesting system furthermore comprising a flexible fixture spacer element (130) having at least three points of force application (131,132) and at least two driving means (140) for exerting forces on at least two of the points of force application (131) such that the direction of each of said photovoltaic receptors (120) is collectively orientable through the action of said driving means.

2. A system (100) according to claim 1, furthermore comprising at least one rigid linkage (180), said rigid linkage (180) connecting at least one of the points of force application (132) to the base (112) of said support.

3. A system (100) according to claim 1, comprising three driving means (140) for exerting force on three points of force application (131) on the flexible fixture spacer element.

4. A system (100) according to any of the previous claims, wherein the flexible fixture spacer element (130) is contacting said flexible fixtures (115).

5. A system (100) according to any of the previous claims, furthermore comprising at least one tensioning element (150) adapted for transmission of mechanical force from at least one of said driving means (140) to at least one of said points of force application (131).

6. A system (100) according to claim 5, wherein said at least one tensioning element (150) is a push-pull cable, at least partly guided through a flexible casing.

7. A system (100) according to any of the previous claims, wherein the flexible fixtures (115) comprise at least one resilient lineal element (210).

8. A system according to claim 7, wherein each flexible fixture is formed in a loop of a resilient lineal element (210).

9. A system (100) according to claim 8, comprising a plurality of connections between said loops for providing flexural integrity to the support.

10. A system (100) according to any of claims 7 to 9, wherein said at least one resilient lineal element (210) comprises glass fiber, steel or a composite material.

11. A system (100) according to any of the previous claims, wherein said flexible fixtures (115) comprise electrical conductors (171) for conducting electricity generated by said photovoltaic receptors (120).

12. A system (100) according to any of the previous claims, furthermore comprising a controlling means (160) adapted for controlling said at least two driving means (140).

13. A system (100) according to any of the previous claims, furthermore comprising an electricity outlet (170) for electrical and/or hybrid vehicles.

14. A system (100) according to any of the previous claims, furthermore comprising at least one illumination source (175).

15. A system (100) according to any of the previous claims, wherein the driving means (140) are linear actuators.
